Europäisches Patentamt

European Patent Office

Office européen des brevets

(11) Publication number: **0 488 347 A1**

## EUROPEAN PATENT APPLICATION

(21) Application number: **91120479.0**

(22) Date of filing: **29.11.91**

(51) Int. Cl.5: **B01D 53/36**, B01J 35/10

(30) Priority: **29.11.90 JP 336270/90**

(43) Date of publication of application:
**03.06.92 Bulletin 92/23**

(84) Designated Contracting States:
**AT CH DE ES FR GB IT LI SE**

(71) Applicant: **NIPPON SHOKUBAI CO., LTD.**
**1-1, Koraibashi, 4-chome**
**Chuo-ku, Osaka-shi(JP)**

(72) Inventor: **Horiuchi, Makoto**
**36-33, Aoyama**
**Himeji-shi, Hyogo-ken(JP)**
Inventor: **Saito, Koichi**
**18-6, Yashiromiyamae-cho**
**Himeji-shi, Hyogo-ken(JP)**

(74) Representative: **Kraus, Walter, Dr. et al**
**Patentanwälte Kraus, Weisert & Partner**
**Thomas-Wimmer-Ring 15**
**W-8000 München 22(DE)**

(54) **Diesel engine exhaust gas-purifying catalyst.**

(57) A Diesel engine exhaust gas-purifying catalyst which comprises a refractory three dimensional structure loaded with a catalytic component comprising zirconia having a specific surface area of 50 to 200 $m^2/g$ and a primary particle average diameter of 50 to 200 Å, loaded with at least one noble metal selected from palladium and rhodium, in a dispersed state.

EP 0 488 347 A1

This invention relates to a Diesel engine exhaust gas-purifying catalyst.

Recently, fine particle substances in Diesel engine exhaust gases (mainly comprising solid carbon fine particles, sulfur fine particles, liquid or solid high molecular hydrocarbon fine particles and the like, and hereinafter, these are generically referred to as "fine particle substances") have become a problem on environment and hygiene. The reason is that almost all of these fine particle substances have a particle size of 1 micron on less, and thus they easily float in the air and are easily taken into the human body through respiration. Thus, investigation is being made toward a course such that the regulation is made severe on the exhaust of fine particle substances from Diesel engines. On the other hand, in proportion to improvements such as higher pressurization fuel injection in Diesel engines and control of fuel injection timing, the amount of fine particle substances exhausted from Diesel engines is lowered to some extent. However, the degree of lowering is still insufficient, and a component (SOF), which is contained in fine particle substances, mainly composed of liquid high molecular weight hydrocarbons and soluble in organic solvents, cannot be removed by the above improvements in engines, and, to the contrary, the content of SOF in fine particle substances increases thereby. Since this SOF contains harmful ingredients such as carcinogens, removal of SOF together with fine particle substances is now an important problem.

As a method for removing fine particle substances, a catalytic method is being investigated wherein, using a catalyst comprising a refractory three dimensional structure loaded with a catalytic substance capable of burning carbonic fine particles, the refractory three dimensional structure being, for example, ceramic foam, wire mesh, metal foam, wall flow type ceramic honeycomb, open flow type ceramic honeycomb or metal honeycomb, fine particle substances in Diesel engine exhaust gases are caught and removed either under the exhaust conditions (gas composition and temperature) of exhaust gases formed under the running conditions of usual Diesel engines or using a heating means such as an electric heater.

In general, on Diesel engine exhaust gas-purifying catalysts, performances are being desired that

(a) the combustion removal efficiency of harmful components other than carbonic fine particles, such as unburned hydrocarbons and carbon monoxide is high even in a lower temperature,

(b) the oxidizing ability of sulfur dioxide ($SO_2$), formed from sulfur components contained in a large amount in light oil used as a fuel, to sulfur trioxide ($SO_3$) is low, and formation of sulfate (sulfur trioxide or sulfuric acid mist resulting from oxidation of sulfur dioxide) can be inhibited,

and

(c) the catalysts withstand use under highly loaded continuous running (have high temperature durability).

Heretofore, various proposals have been made in order to enhance the combustion removal efficiency of carbonic fine particles.

For example, Japanese Laid-Open Patent Publication No. 24597/1980 discloses, as platinum group element catalysts, a rhodium (7.5 %) platinum alloy, a platinum/palladium (50/50) mixture, a catalyst comprising tantalum oxide or cerium oxide loaded with palladium, and further an alloy comprising palladium and 75 weight % or less of platinum, etc. It is stated that these catalysts are also effective for removal of SOF.

Further, Japanese Laid-Open Patent Publication Nos. 129,030/1986, 149,222/1986 and 146,314/1986 disclose catalytic compositions comprising palladium and rhodium as main active components and an alkali metal, an alkaline earth metal, copper, lanthanum, zinc, manganese, etc., and Japanese Laid-Open Patent Publication No. 82944/1984 discloses a catalytic composition comprising at least one metal selected from copper, an alkali metal, molybdenum and vanadium and at least one metal selected from platinum, rhodium and palladium.

Further, as a catalyst to remove SOF in Diesel engine exhaust gases, an open type honeycomb noble metal oxidizing catalyst is reported having through holes parallel to the gas flow (SAE Paper 810263).

The above reported catalysts are in some degree effective for removal of carbonic fine particles by combustion or removal of SOF. However, they have draw-backs that, due to their high oxidizing ability on sulfur dioxide, the formation amount of sulfates increases, the removal rate of total fine particle substances is rather lowered, and these sulfates cause new environmental problems.

Namely, a catalyst has yet been found sufficiently possessing the performances of the above (a), (b) and (c) and the performance for SOF removal, required for Diesel engine exhaust gas-purifying catalysts.

Thus, an object of this invention is to provide a Diesel engine exhaust gas-purifying catalyst capable of efficiently removing fine particle substances in Diesel engine exhaust gases.

Another object of the invention is to provide a Diesel engine exhaust gas-purifying catalyst which has a performance capable of removing by combustion at a low temperature harmful components such as unburned hydrocarbons and carbon monoxide in addition to carbonic fine particles in Diesel engine exhaust gases, and, moreover, has a low oxidizing ability on sulfur dioxide such that formation of sulfates is

EP 0 488 347 A1

inhibited.

Still another object of the invention is to provide a Diesel engine exhaust gas-purifying catalyst capable of efficiently removing SOF in Diesel engine exhaust gases.

Another object of the invention is to provide a Diesel engine exhaust gas-purifying catalyst which has good high temperature durability and can be charged into Diesel cars without causing practical problems.

The present inventors intensely studied for attaining the above objects, and as a result found that the above objects can be attained by loading a refractory three dimensional structure with a catalytic component comprising zirconia having a specific surface area of a specified range and a primary particle average diameter of a specified range, loaded with palladium and/or rhodium in a dispersed state.

Thus, according to this invention is provided a Diesel engine exhaust gas-purifying catalyst which comprises a refractory three dimensional structure loaded with a catalytic component comprising zirconia having a specific surface area of 50 to 200 $m^2$/g and a primary particle average diameter of 50 to 200Å loaded with at least one noble metal selected from palladium and rhodium in a dispersed state.

This invention is described in detail below.

In this invention, palladium and/or rhodium is/are used held on zirconia. One of the characteristics of the invention is to use, as a substrate to be loaded with palladium and/or rhodium, zirconia having a specific surface area of 50 to 200 $m^2$/g, preferably 60 to 120 $m^2$/g and a primary particle average diameter of 50 to 200 Å, preferably 60 to 140 Å.

Even if a substance other than such zirconia is used as a load substrate, the objects of the invention cannot be attained. For example, when alumina is used as a load substrate, effect is observed on purification of harmful components in Diesel engine exhaust gases such as SOF, unburned hydrocarbons and carbon monoxide, but in treatment of exhaust gases of 350°C or more, due to the high oxidizing ability on sulfur dioxide, oxidation of sulfur dioxide specifically takes place particularly at the temperature elevation time of Diesel engine exhaust gases to form sulfates, and thus fine particle substances rather increase. Further, when silica is used as a load substrate, the oxidizing ability is strikingly lowered on harmful components such as SOF, unburned hydrocarbons and carbon monoxide.

Further, when zirconia having a specific surface area below 50 $m^2$/g on a primary particle average diameter above 200 Å, dispersibility of palladium and/or rhodium on zirconia is lowered, and as a result, the oxidizing ability at a low temperature is lowered on harmful components such as SOF, unburned hydrocarbons and carbon monoxide and at the same time, the effect of zirconia is lowered to inhibit oxidation of sulfur dioxide. On the other hand, zirconia having a specific surface area above 200 $m^2$/g or a primary particle average diameter below 50 Å is thermally unstable, and its use is not suitable.

The primary particle average diameter in the invention was calculated based on the diameter and number of particles determined by electron micrographs.

In preparation of the catalyst of the invention, there can be used, as a starting material for palladium, palladium nitrate, palladium chloride, palladium tetramine chloride, a palladium sulfide complex salt or the like. Further, as a starting material for rhodium, there can be used rhodium nitrate, rhodium chloride, hexamminerhodium chloride, a rhodium sulfide complex salt on the like.

The catalyst of the invention can be obtained by loading a refractory three dimensional structure with a catalytic component comprising zirconia having a specific surface area of the above range and a primary particle average diameter of the above range, loaded with the above palladium and/or rhodium in a dispersed state.

As this refractory three dimensional structure, there can be used ceramic foam, open flow ceramic honeycomb, wall flow type honeycomb monolith, open flow metal honeycomb, metal foam, metal mesh or the like. When the Diesel engine exhaust gas contains fine particle substances an amount of 100 mg or less per $m^3$ of the exhaust gas and the SOF content in the fine particle substances is 20 % or more, open flow type ceramic honeycomb or open flow type metal honeycomb is preferably used as the refractory three dimensional structure.

In order to enhance high temperature durability on control oxidizing ability, the above catalytic component in the catalyst of the invention may, if necessary, contain at least one element selected from rare earth elements such as scandium, yttrium, lanthanum, cerium, praseodymium and neodymium, alkali metals such as lithium, sodium and potassium, alkaline earth metals such as beryllium, magnesium and calcium, and gold, silver, copper and zinc.

The amounts of zirconia, palladium and rhodium to be held in the catalyst of the invention are 10 to 300 g, 0 to 6 g and 0 to 3 g, respectively, per liter (hereinafter expressed by L) of the refractory three dimensional structure. The ratio of at least one noble metal selected from palladium and rhodium to zirconia in load amount (the ratio of noble metal/zirconia) is preferably in the range of 0.001/1 to 0.2/1.

The load amount of the above elements to be added according to necessity is preferably 50 g or less in

3

terms of oxide per L of the refractory three dimensional structure.

There is no particular limitation on preparation method of the catalyst of the invention, and it can, for example, be prepared according to the following methods.

(1) Fine particles of zirconia are slurried by wet pulverizing. A refractory three dimensional structure is dipped in this slurry, and after removal of excess slurry, dried at 80 to 250°C and then calcined at 300 to 850°C.

The resulting refractory three dimensional structure is dipped in an aqueous solution containing a certain amount of palladium and/or rhodium compound(s). After removal of excess solution, the structure is dried at 80 to 250°C and then calcined at 300 to 850°C to give a desired catalyst.

(2) Zirconia is added to and dipped in an aqueous solution containing a certain amount of palladium and/or rhodium compound(s), and dried at 80 to 250°C and then calcined at 300 to 850°C to disperse and hold palladium and/or rhodium on zirconia.

Then, the zirconia fine particles loaded with palladium and/or rhodium are slurried by wet pulverizing. A refractory three dimensional structure is dipped in this slurry, and, after removal of excess slurry, dried at 80 to 250°C and then calcined at 300 to 850°C to give a desired catalyst.

In the above methods (1) and (2), zirconia sol may be added to the slurry of zirconia fine particles in order to enhance the strength to adhere the zirconia fine particles on the refractory three dimensional structure. Further, it is possible to coat the surface layer of the catalyst of the invention after preparation with zirconia sol.

The catalyst of the invention is excellent in combustion removal performance at low temperature on harmful components such as unburned hydrocarbons and carbon monoxide as well as carbonic fine particles, and, moreover, it has low oxidizing ability on sulfur dioxide, so that formation of sulfates can be inhibited. Therefore, the catalyst of the invention is excellent in lowering of fine particle substances in Diesel engine exhaust gases, and, by use of the catalyst of the invention, Diesel engine exhaust gases can efficiently be purified.

Further, since the catalyst of the invention is also excellent in removing ability of SOF, it is extremely effective for purification of Diesel engine exhaust gases.

Moreover, the catalyst of the invention is also excellent in high temperature durability, and thus can be mounted on a Diesel cars without causing any practical problems.

As apparent from the foregoing, the catalyst of this invention is extremely useful as a Diesel engine exhaust gas-purifying catalyst.

This invention is more specifically described below by examples.

Example 1

1 kg of zirconia having a specific surface area of 68 m$^2$/g and a primary particle average diameter of 110 Å was added to an aqueous solution prepared by dissolving in deionized water of palladium nitrate in an amount of 20 g in terms of palladium and rhodium nitrate in an amount of 4 g in terms of rhodium. After sufficient stirring, the zirconia was dried at 150°C for 3 hours and then calcined at 500°C for 2 hours to give zirconia fine particles loaded with palladium and rhodium in a dispersed state. 1 kg of the zirconia fine particles were slurried by wet pulverizing.

In the thus obtained slurry was dipped a cylindrical cordierite-made honeycomb carrier of diameter 5.66 inches and length 6.00 inches having open flow gas flow cells in a number of about 300 per square inch of the cross section. After removal of excess slurry, the carrier was dried at 150°C and then calcined at 500°C for 1 hour to obtain completed catalysts.

The load amounts of zirconia, palladium and rhodium in this catalyst were 50 g, 1 g and 0.2 g, respectively, per L of the structures.

Example 2

The procedure of Example 1 was repeated, except that zirconia having a specific surface area of 160 m$^2$/g and a primary particle average diameter of 55 Å was used as zirconia, to obtain completed catalysts.

The load amounts of zirconia, palladium and rhodium in this catalyst were 50 g, 1 g and 0.2 g, respectively, per L of the structure.

Example 3

The procedure of Example 1 was repeated, except that zirconia having a specific surface area of 95

$m^2/g$ and a primary particle average diameter of 80 Å was used as zirconia, to obtain completed catalysts.

The load amounts of zirconia, palladium and rhodium in this catalyst were 50 g, 1 g and 0.2 g, respectively per L of the structure.

Example 4

1 kg of zirconia having a specific surface area of 90 $m^2/g$ and a primary particle average diameter of 85 Å was added to an aqueous solution prepared by dissolving in deionized water of palladium chloride in an amount of 40 g in terms of palladium, hexammirerhodium chloride in an amount of 2 g in terms of rhodium, 20 g of copper sulfate and 106 g of praseodymium nitrate. After sufficient stirring, the zirconia was dried at 150°C for 3 hours and then calcined at 600°C for 1 hour to give zirconia fine particles loaded with palladium, rhodium, copper oxide and praseodymium oxide in a dispersed state.

1 kg of the fine particles were slurried by wet pulverizing, and in this slurry was dipped the same cordierite-made honeycomb carrier as used in Example 1. After removal of excess slurry, the carrier was dried at 150°C for 2 hours and then calcined at 400°C for 1 hour to obtain completed catalysts.

The load amounts of zirconia, palladium, rhodium, copper oxide (CuO) and praseodymium oxide ($Pr_6O_{11}$) were 50 g, 2 g, 0.5 g, 2 g and 0.1 g, respectively, per L of the structure.

Example 5

1 kg of zirconia having a specific surface area of 110 $m^2/g$ and a primary particle average diameter of 70 Å was added to an aqueous solution of palladium tetramine chloride in an amount of 37.5 g in terms of palladium. After sufficient stirring, the zirconia was dried at 80°C for 2 hours and further calcined at 700°C for 1 hour to give zirconia fine particles loaded with palladium in a dispersed state.

Mixed fine particles consisting of 943 g of the fine particles and 57 g of neodymium oxide were slurried by wet pulverizing, and in this slurry was dipped the same cordierite-made honeycomb carrier as used in Example 1. After removal of excess slurry, the carrier was dried at 150°C for 3 hours and then calcined at 800°C for 1 hour to obtain completed catalysts.

The load amounts of zirconia, palladium and neodymium oxide ($Nd_2O_3$) in this catalyst were 80 g, 3 g and 5 g, respectively, per L of the structure.

Example 6

1 kg of zirconia having a specific surface area of 160 $m^2/g$ and a primary particle average diameter of 55 Å was added to an aqueous solution containing a palladium sulfide complex salt in an amount of 6.7 g in terms of palladium, 19.5 g of silver nitrate and 177 g of lanthanum acetate. After sufficient stirring, the zirconia was dried at 150°C for 3 hours and then calcined at 500°C for 1 hour to give zirconia fine particles loaded with palladium, silver oxide and lanthanum oxide is a dispersed state.

1 kg of the fine particles were slurried by wet pulverizing, and in this slurry was dipped the same conrdicrite-made honeycomb carrier as used in Example 1. After removal of excess slurry, the carrier was dried at 150°C for 2 hours and then calcined at 750°C for 1 hour to obtain completed catalysts.

The load amounts of zirconia, palladium, silver oxide ($Ag_2O$) and lanthanum oxide ($La_2O_3$)in this catalyst were 150 g, 1 g, 2 g and 10 g, respectively, per L of the structure.

Example 7

1 kg of zirconia having a specific surface area of 80 $m^2/g$ and a primary particle average diameter of 110 Å was slurried by wet pulverizing, and in this slurry was dipped the same cordicrite-made honeycomb carrier as used in Example 1. After removal of excess slurry, the carrier was dried at 150°C for 3 hours and then calcined at 500°C for 1 hour to give a structure loaded with zirconia.

This structure was dipped in 2.5 L of an aqueous solution prepared by dissolving in deionized water of palladium oxide in an amount of 19.2 g in terms of palladium, rhodium chloride in an amount of 9.6 g in terms of rhodium and 10.3 g of yttrium chloride. After removal of excess solution, the structure was dried at 150°C for 3 hours and then calcined at 500°C for 2 hours to obtain completed catalysts.

The load amounts of zirconia, palladium, rhodium and yttrium oxide ($Y_2O_3$) were 30 g, 1 g, 0.5 g and 0.2 g, respectively, per L of the structure.

Example 8

5

1 kg of zirconia having a specific surface area of 52 $m^2/g$ and a primary particle average diameter of 150 Å was added to an aqueous solution containing 54.5 g in terms of palladium of palladium nitrate and 288 g of praseodymium nitrate. After sufficient stirring, the zirconia was dried at 150°C for 3 hours and then calcined at 500°C for 1 hour to give zirconia fine particles loaded with palladium and praseodymium oxide in a dispersed state.

1 kg of the fine particles were slurried by wet pulverizing, and in this slurry was dipped a cylindrical stainless steel-made honeycomb carrier of diameter 5.66 inches and length 6.0 inches having open flow gas flow cells in a number of about 400 per square inch of the cross section. After removal of excess slurry, the carrier was dried at 150°C for 2 hours and then calcined at 500°C for 1 hour to give a structure loaded with the zirconia-palladium-praseodymium fine particles in an amount of 64 g per L of the structure.

Then, the above structure was dipped in 2.5 L of an aqueous solution containing 6 weight % zirconia prepared by diluting with deionized water commercial zirconia sol containing 20 weight % zirconia. After removal of excess solution, the structure was dried at 150°C for 2 hours and then calcined at 400°C for 1 hour to obtain completed catalysts comprising the above zirconia-palladium-praseodymium oxide-loaded structure further loaded with zirconia in an amount of 5 g per L thereof.

The load amounts of zirconia, palladium and praseodymium oxide in this catalyst were 60 g, 3 g and 6 g, respectively, per L of the structure.

Example 9

1 kg of zirconia having a specific surface area of 80 $m^2/g$ and a primary particle average diameter of 80 Å was added to an aqueous solution prepared by dissolving in deionized water of palladium nitrate in an amount of 10 g in terms of palladium and rhodium nitrate in an amount of 25 g in terms of rhodium. After sufficient stirring, the zirconia was dried at 150°C for 3 hours and then calcined at 500°C for 2 hours to give zirconia-palladium-rhodium fine particles.

500 g of the fine particles were slurried by wet pulverizing to give 2.5 1 of a slurry containing 20 weight % zirconia-palladium-rhodium fine particles. To this slurry was added 104 g of commercial zirconia sol containing 20 weight % zirconia to give a slurry of zirconia-palladium-rhodium fine particles.

In this slurry was dipped a cylindrical cordicrite-made ceramic foam of diameter 5.66 inches and length 6.00 inches having a cell number such that the number of cells formed with ceramic skeleton is about 12 in 1 inch and having a percentage of open frontal area of about 90 %. After removal of excess slurry, the ceramic foam was dried at 150°C for 2 hours and then calcined at 500°C for 2 hours to obtain completed catalysts loaded with zirconia-palladium-rhodium fine particles.

The load amounts of zirconia, palladium and rhodium in this catalyst were 25 g, 0.2 g and 0.5 g, respectively, per L of the structure.

Comparative example 1

The procedure of Example 1 was repeated, except that silica having a specific surface area of 110 $m^2/g$ and a primary particle average diameter of 85 Å was used in place of zirconia, to obtain completed catalysts.

The load amounts of silica, palladium and rhodium in this catalyst were 50 g, 1 g and 0.2 g, respectively, per L of the structure.

Comparative example 2

The procedure of Example 1 was repeated except that alumina having a specific surface area of 85 $m^2/g$ and a primary particle average diameter of 120 Å was used in place of zirconia, to obtain completed catalysts.

The load amounts of alumina, palladium and rhodium in this catalyst were 50 g, 1 g and 0.2 g, respectively, per L of the structure.

Comparative example 3

The procedure of Example 1 was repeated, except that zirconia having a specific surface area of 20 $m^2/g$ and a primary particle average diameter of 250 Å was used as zirconia to obtain completed catalysts.

The load amounts of zirconia, palladium and rhodium in this catalyst were 50 g, 1 g and 0.2 g, respectively, per L of the structure.

Comparative example 4

The procedure of Example 1 was repeated, except that zirconia having a specific surface area of 310 $m^2/g$ and a primary particle average diameter of 30 Å was used as zirconia, to obtain completed catalysts.

The load amounts of zirconia, palladium and rhodium in this catalyst were 50 g, 1 g and 0.2 g, respectively, per L of the structure.

The load amounts of components in the catalysts obtained in Examples 1-9 and Comparative examples 1-4 are shown in Table 1.

[Evaluation of Catalyst]

Performance of each catalyst on purification of Diesel engine exhaust gas was evaluated according to the following method.

In this method were used a supercharged direct injection type Diesel engine (4-cylindered, 2800 CC) and, as a fuel, light oil whose sulfur content was 0.2 weight %.

Each catalyst was charged into the exhaust gas tube from the engine, and 300 hour duration test was carried out under conditions of an engine revolution number of 2,500 rpm (full load) and a catalyst entrance temperature of 600°C.

Then, after the catalyst was exposed to the air for 1 hour under conditions of an engine revolution number of 2,000 rpm, a torque of 3.0 kg.m and a catalyst entrance temperature of 200°C, running conditions were changed to an engine revolution number of 2,000 rpm and a torque of 14.0 kg.m. Under a condition such that the catalyst entrance temperature was stabilized to 400°C, the contents of fine particle substances in the exhaust gas were measured by the usual dilution tunnel method at a point before entrance into the catalyst bed (entrance) and at a point after exit from the catalyst bed (exit), and thereby the purification percentage (%) of fine particle substances was determined.

Further, the fine particle substances caught using the dilution tunnel were extracted with a dichloromethane solution, the exhaust amount of SOF was determined based on weight change of the fine particle substances between before and after the extraction, and thereby the purification percentage of SOF was determined.

Further, the analyses of sulfur dioxide, gaseous hydrocarbons and carbon monoxide in the exhaust gas before entrance into the catalyst bed and in the exhaust gas after passing through the catalyst bed were made at the same time, and thereby their conversions (%) were determined.

The results are shown in Table 2.

Table 1

| Example Comparative | Load substrate | | | | Nobel metal | | Added element | | Refractory dimen-sional structure |
|---|---|---|---|---|---|---|---|---|---|
| | Kind | Specific surface area $(m^2/g)$ | Average diameter of primary particles (A°) | Load amount (*) | Component | Load amount (*) | Component | Load amount (*) | |
| **Example** 1 | $ZrO_2$ | 68 | 120 | 50 | Pd/Rh | 1/0.2 | - | - | Ceramic honeycomb |
| 2 | ditto | 160 | 55 | 50 | ditto | 1/0.2 | - | - | ditto |
| 3 | ditto | 95 | 80 | 50 | ditto | 1/0.2 | - | - | ditto |
| 4 | ditto | 90 | 85 | 50 | ditto | 2/0.5 | CuO $Pr_6O_{11}$ | 0.5 2 | ditto |
| 5 | ditto | 110 | 70 | 80 | Pd | 3 | $Nd_2O_3$ | 5 | ditto |
| 6 | ditto | 160 | 55 | 150 | Pd | 1 | $Ag_2O$ $La_2O_3$ | 2 10 | ditto |
| 7 | ditto | 80 | 110 | 30 | Pd/Rh | 1/0.5 | $Y_2O_3$ | 0.2 | ditto |
| 8 | ditto | 52 | 150 | 55 | Pd | 3 | $Pr_6O_1$ $ZrO_2$sol | 6 | Metal honeycomb |
| 9 | ditto | 80 | 80 | 20 | Pd/Rh | 0.2/0.5 | $ZrO_2$ sol | 5 | Ceramic foam |
| **Comparative example** 1 | $SiO_2$ | 110 | 85 | 50 | Pd/Rh | 1/0.2 | - | - | Ceramic honeycomb |
| 2 | $Al_2O_3$ | 85 | 120 | 50 | ditto | 1/0.2 | - | - | ditto |
| 3 | $ZrO_2$ | 20 | 250 | 50 | ditto | 1/0.2 | - | - | ditto |
| 4 | ditto | 310 | 30 | 50 | ditto | 1/0/2 | - | - | ditto |

(*) (g/L-carrier)

EP 0 488 347 A1

Table 2

| | | Content of fine particle substances in the exhaust gas | | Purification percentage of fine particle substances (%) | Hydrocarbon conversion (%) | Carbon monoxide conversion (%) | Sulfur dioxide conversion (%) | SOF purification percentage (%) |
|---|---|---|---|---|---|---|---|---|
| | | Entrance (mg/m³) | Exit (mg/m³) | | | | | |
| Example | 1 | 70.5 | 52.5 | 25.5 | 91 | 68 | 0.3 | 86 |
| | 2 | 69.7 | 48.7 | 30.1 | 92 | 72 | 0.2 | 92 |
| | 3 | 71.3 | 52.0 | 27.1 | 89 | 76 | 0.3 | 85 |
| | 4 | 70.6 | 46.8 | 33.7 | 86 | 59 | 0.0 | 81 |
| | 5 | 67.2 | 44.6 | 33.6 | 90 | 78 | 0.7 | 91 |
| | 6 | 69.3 | 47.9 | 30.9 | 92 | 77 | 0.4 | 88 |
| | 7 | 72.6 | 54.7 | 25.6 | 86 | 74 | 0.1 | 84 |
| | 8 | 66.5 | 48.7 | 26.8 | 94 | 81 | 0.7 | 95 |
| | 9 | 70.3 | 45.7 | 35.0 | 81 | 62 | 0.0 | 86 |
| Comparative example | 1 | 71.8 | 64.5 | 10.2 | 54 | 27 | 0.2 | 38 |
| | 2 | 70.1 | 152.3 | -117.3 | 93 | 70 | 31.0 | 91 |
| | 3 | 66.7 | 64.6 | 3.15 | 68 | 46 | 4.5 | 56 |
| | 4 | 73.1 | 82.6 | -123.0 | 73 | 49 | 7.1 | 68 |

Claims

1. A catalyst for purification of exhaust gases from Diesel engines wherein a catalyst component comprising zirconia having a specific surface area of 50 to 200 m²/g and a primary particle average diameter of 50 to 200 Å and supporting at least one noble metal selected from palladium and rhodium in a dispersed state is loaded on the refractory three-dimensional structure.

2. The catalyst of claim 1 wherein the catalyst component further contains at least one element selected from the group consisting of rare earth elements, alkali metals, alkaline earth metals, gold, silver, copper and zinc.

3. The catalyst of claim 1 or 2 wherein the zirconia has a specific surface area of 60 to 120 $m^2$/g and a primary particle average diameter of 60 to 140 Å.

4. The catalyst of any of claims 1 to 3 wherein 10 to 300 g of zirconia, 0 to 6 g of palladium and 0 to 3 g of rhodium are held per liter of the refractory three-dimensional structure, provided that the weight ratio of palladium and/or rhodium to zirconia is in the range of 0.001/1 to 0.2/1.

European Patent
Office

**EUROPEAN SEARCH REPORT**

EP    91 12 0479

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 272 136 (NIPPON SHOKUBAI KAGAKU KOGYO)<br>* page 2, line 1 - line 6 *<br>* page 3, line 21 - line 27; claims 1-3; examples 4-6 * | 1-4 | B01D53/36<br>B01J35/10 |
| A | EP-A-0 397 411 (NIPPON SHOKUBAI KAGAKU KOGYO)<br>* claims 1-5,7-10; example 14 * | 1,2,4 | |
| A | PATENT ABSTRACTS OF JAPAN<br>vol. 10, no. 166 (C-353)(2222) 13 June 1986<br>& JP-A-61 018 432 ( MATSUSHITA DENKI SANGYO K.K. ) 27 January  1986<br>* abstract * | 1,3 | |
| | ----- | | **TECHNICAL FIELDS SEARCHED (Int. Cl.5 )**<br><br>B01D<br>B01J |

The present search report has been drawn up for all claims

| Place of search | Date of completion of the search | Examiner |
|---|---|---|
| THE HAGUE | 28 JANUARY 1992 | CUBAS ALCARAZ J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................................

& : member of the same patent family, corresponding document

EPO FORM 1503 03.82 (P0401)